(19) Europäisches Patentamt
European Patent Office
Office européen des brevets

(11) Publication number: **0 260 664 A2**

# (12) EUROPEAN PATENT APPLICATION

(21) Application number: 87113494.6

(51) Int. Cl.⁴: **C01G 23/053**

(22) Date of filing: 15.09.87

(30) Priority: 16.09.86 IT 2171086

(43) Date of publication of application:
23.03.88 Bulletin 88/12

(84) Designated Contracting States:
BE CH DE ES FR GB LI NL SE

(71) Applicant: Montedison S.p.A.
31, Foro Buonaparte
I-20121 Milan(IT)

(72) Inventor: Montino, Franco, Dr.
30, Via Perazzi
I-28100 Novara(IT)
Inventor: Spoto, Giuseppe, Dr.
60/B, corso Allamano
I-10136 Torino(IT)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

## (54) Process for preparing titanium dioxide in the form of spherical particles by hydrolysis of Ti (IV).

(57) There is described a process for preparing titanium dioxide in the form of spherical particles having a particle size distribution, in terms of dw/dn, of ≤ 2, by hydrolysis of strongly acidic solutions of Ti(IV), wherein the molar ratio $SO_4^{=}$/Ti(IV) is at least 1.5, in the presence of cationic polyelectrolytes having a molecular weight of more than 1 million and an ionicity of at least 3 milliequivalents per gram.

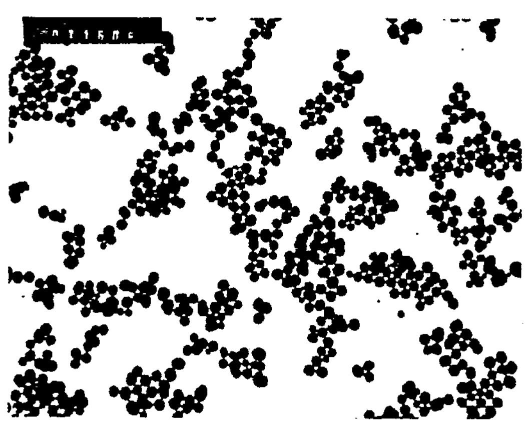

FIG. 1

1 μm

EP 0 260 664 A2

Xerox Copy Centre

# PROCESS FOR PREPARING TITANIUM DIOXIDE IN THE FORM OF SPHERICAL PARTICLES BY HYDROLYSIS OF Ti(IV)

The present invention relates to a process for preparing hydrated titanium dioxide in the form of non-agglomerated spherical particles having sizes of less than 1 µm or higher than 1 µm up to a value of 1.5 µm.

In particular, the invention relates to the preparation of hydrated titanium dioxide, starting from aqueous solutions comprising Ti(IV) ions, by means of hydrolysis.

In particular, the process according to the invention makes it possible to achieve a homogeneous precipitation by hydrolysis of a strongly acidic solution through ageing at high temperatures.

"Homogeneous precipitation" means precipitation which occurs in a solution in which local supersaturation phenomena are drastically reduced.

Titanium dioxide has a wide range of uses, for example as pigment, catalyst or photoconductor.

It is generally known that particle size distribution, morphology and agglomeration of the titanium dioxide particles strongly influence the properties of the pigments obtained therefrom.

US-A-4,241,042 discloses a method of preparing titanium dioxide, having the above mentioned characteristics, which makes use of an aerosol. Said processes comprise the preparation of a liquid aerosol of an hydrolizable (Ti(IV) compound, and the subsequent reaction of the resulting aerosol with water vapor to obtain hydrated titanium dioxide which, upon drying at a temperature of 120°C to 130°C, is converted to the crystalline phase anatase; if subjected to higher temperatures, in the order of 1100°C, it is converted to rutile.

This method makes it possible to obtain titanium dioxide with good properties, particularly if a nucleating agent, such as AgCl, is used.

An alternative method, again employing an aerosol, by which the mixing step may be avoided, is described in US-A-4,574,078.

The above methods lead to good results, but of course involve the formation of an aerosol which, as is well known, requires exactly controlled conditions for providing a titanium dioxide having the above-described characteristics.

A method of preparing titanium dioxide having the characteristics mentioned above through an alternative process, i.e. homogeneous precipitation, is described in "Preparation and Mechanism of Formation of Titanium Dioxide Hydrosols of Narrow Size Distribution", E. Matijevic, M. Budnic and L. Meites in "Journal of Colloid and Interface Science" Vol. 61, (2), 1977.

The process consists in subjecting $TiCl_4$ solutions which are acidic due to HCl to hydrolysis in the presence of sulphate ions at a temperature of about 100°C.

Said process, however, is affected by the drawback of a very low productivity, as it requires very long reaction times (in the order of a few days).

Thus a commercial-scale process cannot be carried out on the basis of said technique.

Thus, there is the strong need to have a homogeneous precipitation technique available which allows to obtain a titanium dioxide with the above characteristics at a high productivity.

Surprisingly, it has now been found that it is possible to prepare titanium dioxide in the form of non-agglomerated spherical particles at a very high productivity, either monodispersed or polydispersed with a low polydispersion index, by working under aqueous conditions.

Thus, it is an object of the present invention to provide a process for preparing hydrated titanium dioxide in the form of spherical particles, having a polydispersion index indicated by $dw/dn \leq 2$, in particular $\leq 1.20$ (monodispersed particles), wherein dw is the average weighed diameter of the particles and dn is the average linear diameter, by hydrolysis of aqueous solutions of Ti(IV) and $SO_4^{=}$ ions, strongly acidic due to HCl or $H_2SO_4$, in which the $SO_4$/Ti(IV) molar ratio is at least equal to 1.5, and operating in the presence of cationic polyelectrolytes which are soluble under the reaction conditions and have an average molecular weight of more than 1 million and an ionicity of at least 3 milliequivalents/g (meq/g), said hydrolysis being carried out under such conditions as to result in a homogeneous precipitation of titanium dioxide.

Generally, the concentration of Ti(IV) in the starting solution varies from 0.05 moles/1 to 0.25 moles/1, preferably from 0.1 to 0.2 moles/1.

Preferably, the cationic polyelectrolytes have an ionicity of more than 3.5 meq/g and a molecular weight ranging from 3 to 6 million.

It has been found that the results provided by the process according to the present invention cannot be obtained when anionic polyelectrolytes having the same combination of ionicity and molecular weight as indicated for the cationic polyelectrolytes are used instead of said cationic polyelectrolytes.

Analogously, the results provided by the present invention cannot be obtained by using polymers having the indicated molecular weight, but comprising only neutral (non-ionic) repeating units. The polyelectrolytes used according to the invention are preferably utilized in amounts of more than 3 % by weight, based on the theoretical amount of $TiO_2$ corresponding to the Ti(IV) present in the initial solution.

Polyelectrolyte amounts higher than 4% by weight, in particular of 5.5% by weight, are particularly preferred.

Before use, the polyelectrolytes employed in the process of the present invention are preferably dissolved in water at concentrations of a few g/l, generally in the order of 1 or 2 g/l.

It is possible to use higher polyelectrolyte amounts than the indicated ones, for example in the order of 10 or 20% by weight, without obtaining significant variations as regards the morphology and the size distribution of the particles.

It has been found that concentrations of ionic groups corresponding to at least 3 meq/g are the ones which provide the best results. Preferably, the amount of cationic groups is higher than 4 meq/g.

The ionicity of the cationic polyelectrolyte is quantitatively determined according to known methods, using an anionic polyelectrolyte as titrating agent. The method utilized in the present invention is described in "Polyeletrolyte Determination at Low Concentration", L.K. Wang and W.W. Shuster, Ind. Eng. Chem. Produc. Res. Dev., Vol. 14, No. 4, 1975, pages 312-314; it allows to calculate the milliequivalents per gram (meq/g) of positive charge which is present in the electrolyte.

The anionic polyelectrolyte utilized as titrating agent is a commercial product, designated PVSAK, consisting of the potassium salt of polyvinylsulphonic acid.

Furthermore it has been found that the straighter the structure of the polyelectrolyte is, the better the obtained results are. The molecular weight being the same, a polyelectrolyte having a branched structure shows a lower activity. However, branched cationic polyelectrolytes may also be useful, provided they are soluble under the reaction conditions and are utilized in higher amounts.

The polyelectrolytes which have proved to be particularly suited for the process of the present invention are polymers comprising repeating units based on substituted acrylamide, having the general formula:

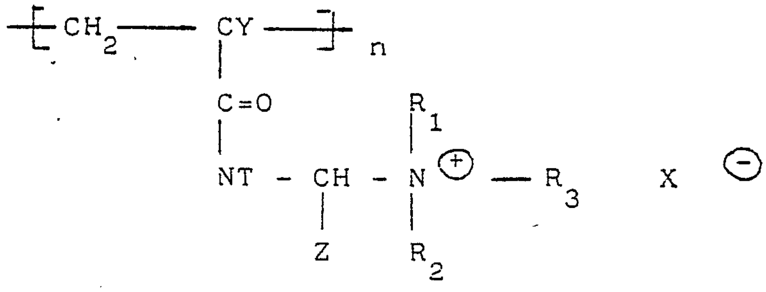

wherein $R_1$, $R_2$, $R_3$ and T are the same or different and are selected from H and aliphatic hydrocarbon radicals having 1 to 4 carbon atoms;

Y is H or $-CH_3$;

Z is H or $-CH_3$;

X is an anion, in particular chloride or sulphate; and

n is an integer.

The polymers comprising the above units may be prepared from non-ionic polyacrylamide by means of known reactions, for example by the Mannich reaction.

Further utilizable cationic polyelectrolytes are the polyvinylamines which are obtainable from the polyacrylamides through the Hoffman degradation reaction and subsequent quaternization of the nitrogen atom, according to conventional techniques, or by polymerization, according to known processes, of the vinylamines and subsequent quaternization of the nitrogen atom. Said polyvinylamines have the general formula:

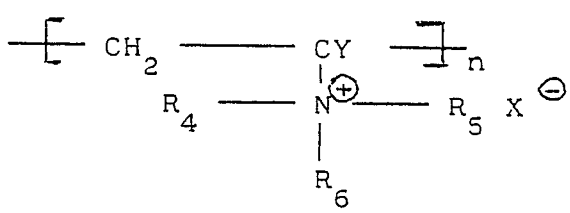

wherein $R_4$, $R_5$ and $R_6$ have the meanings indicated for $R_1$ hereinbefore and X, Y and n are the same as defined above.

The preferred compounds are those in which Y, Z, T, $R_3$ and $R_4$ are H and $R_1$, $R_2$, $R_5$ and $R_6$ are the same or different and are selected from H, $-CH_3$ or $-C_2H_5$.

The polymers which comprise the above cationic units may also contain neutral units derived from unsubstituted acrylamide, i.e. of the general formula:

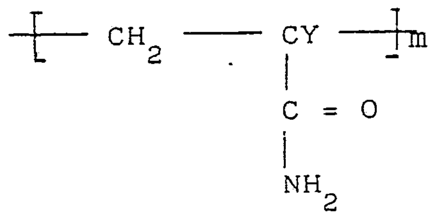

wherein Y is the same as defined above and m is an integer.

The neutral cationic units are statistically distributed along the polymer chain, the ionicity and the molecular weight having the indicated values.

However, it is also possible to use copolymers in which the neutral unit is selected from one or more of the the following classes:

a1) 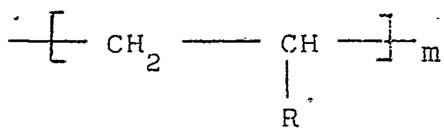

in which R = H or an aliphatic hydrocarbon radical containing 1 to 4 carbon atoms;

a2) 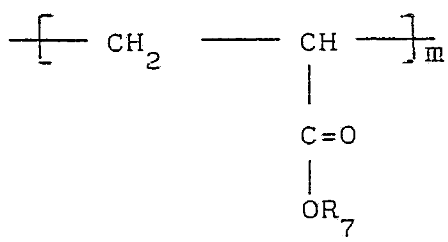

in which $R_7$ is the same as R;

a3) 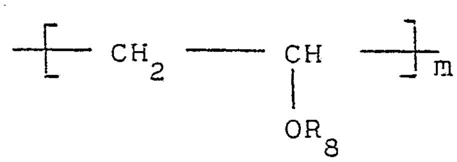

in which $R_8$ is the same as R;

a4) 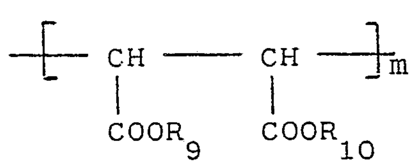

in which $R_9$ and $R_{10}$ are the same as R; and

a5) 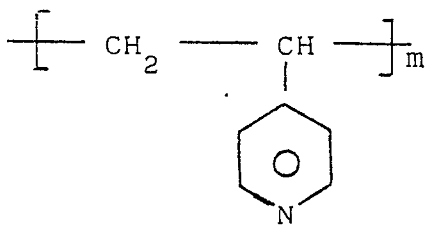

m in the various classes being the same as defined above.

The copolymers containing the cationic acrylamide units and the indicated neutral groups may be prepared according to processes of the art.

In particular, the polymers comprising the specified ionic units and the groups of class a1) may be obtained through polymerization of the olefin $CH_2=CHR$ with acrylamide; the ones of class a2) may be obtained through polymerization of acrylamide with an acrylic acid ester; the ones of class a3) may be obtained through copolymerization of a vinylether with acrylamide; the ones of class a4) may be obtained through copolymerization of maleic acid with acrylamide; and the ones of class a5) may be obtained through copolymerization of acrylamide with vinyl pyridine.

If various monomers are polymerized at the same time, the neutral units indicated in the various groups may also be present simultaneously in the polymeric chain, the previously indicated molecular weight value and ionicity value being maintained at any rate.

The combination of the various radicals contained in the above neutral and cationic groups is always chosen so as to provide polymers which are soluble under the conditions of use according to the present invention.

Particularly preferred, within the various classes, are the hydrocarbon radicals with 1 or 2 carbon atoms.

The polyelectrolytes of the polyacrylamide class are commercial products designated Ecoclar ®, Praestol ® and Separan ® and available both in the solid state and as emulsions. Examples of preferred polyelectrolytes are Ecolar ® 8337, 8032 or 8017 and Praestol ® 444K or 555K.

They are preferably utilized by preparing aqueous solutions of the commerical polyelectrolyte at concentrations of 1 to 2 g/l at the moment of their use and by withdrawing the necessary amount. In fact, the aqueous solutions of these polyelectrolytes are stable for a short period of time (generally for no longer than for a few days).

The hydrolysis reaction is conducted at high temperatures; it is preferable to operate at temperatures ranging from 90°C to the boiling point of the starting solutions, in order to complete the precipitation in a very short time.

Under these conditions the almost quantitative precipitation of titanium dioxide requires a few hours, generally from 1 to 4 hours.

It is possible to work at or below atmospheric pressure; in the latter case, the required reaction times are further reduced.

The titanium (IV) salt may be a sulphate or a chloride, titanium tetrachloride being preferably utilized.

The titanium dioxide obtained by the process of the present invention occurs in the anastase phase according to the X-ray powder spectrum.

Rutile titanium dioxide having the same morphology and the same particle size distribution as the anatase titanium dioxide obtained by the process of the invention is obtainable by subjecting the latter to conventional heat treatment processes. In particular it has been found that already at 900°C it is possible to obtain the rutile crystalline phase.

Average sizes (dw and dn) as well as morphological and granulometric characteristics have been determined under an electron microscrope by the TEM technique. The method of determining dw and dn is described by E.A. Collins, J.A. Davidson and C.A. Daniels in "Review of Common Methods of Particle Size Measurement", Journal of Paint Technology, vol. 47, No. 604, May 1975.

The hydrated $TiO_2$ obtained by the process of the present invention has diameters ranging from 0.2 to 1.5 $\mu$m.

The pH of the solution is strongly acidic due to HCl or $H_2SO_4$. The sulphate ions absolutely necessary for the process of the invention are provided by either $H_2SO_4$ or a soluble salt thereof, for example sodium sulphate.

In particular, when the utilized titanium salt is $TiCl_4$ and the Ti(IV) concentration is 0.17 M, the preferred ratios are as follows:
[HCl] / [Ti(IV] = 12, [$SO_4^{=}$] / [Ti(IV)] = 2.4;
the concentration of the cationic polyelectrolyte is 5.5% by weight, based on the theoretical amount of $TiO_2$. The hydolysis time ranges from 1 hour to 5 hours.

Under such conditions, a suspension of spheroidal particles with an average diameter of about 0.43 µm is obtained. The product is separated from the mother liquors by centrifugation.

A person skilled in the art will be able to easily determine the best conditions as a function of the starting Ti(IV) concentration.

The following examples are given merely to illustrate the present invention, yet without being a limitation thereof.

Example 1

13.2 ml of $H_2SO_4$ (96%) and thereafter 11.2 ml of $TiCl_4$ (98%) were added gradually and under stirring to 100.2 ml of HCl (37%) to obtain a solution which was subsequently poured into 450 ml of $H_2O$, in which 0.45 g of Ecoclar 8017 had been dissolved through prolonged stirring. The final volume was adjusted to 600 ml with distilled water to obtain a clear and colourless solution. Thus [Ti(IV)] = 0.17 M, [HCl] / [Ti(IV] = 11.9, [$H_2SO_4$] / [Ti(IV)] = 2.4, while Ecoclar was present in an amount of 5.5% by weight, based on the theoretical amount of $TiO_2$.

The strongly acidic solution of Ti(IV) ions was then poured into a 1-liter flask equipped with a reflux condenser. The resulting mixture was heated to 104°C and maintained at this temperature for 1.5 hours without stirring.

Already after 5 minutes of heating to 100°C a slight opalescence could be observed, the intensity of which rapidly increased.

At the end of the experiment the resulting milky suspension was centrifuged and the product separated therefrom was washed with distilled water and dried in an oven at 120°C.

There were obtained 6.54 g of product which, according to TEM analysis, was composed of sherical particles having an average diameter of about 0.4 µm and a narrow size distribution (Fig. 1, enlargement 4580 X). The X-ray diffraction spectrum showed that $TiO_2$ was present in the anatase form.

Example 2 (comparative test)

The test of Example 1 was repeated, with the only exception that no polyelectrolyte was used. After 90 minutes of heating to 104°C the solution exhibited only a very slight opalescence. After a further 90 minutes at the same temperature, the amount of product recoverable by centrifugation was very low and the product, according to TEM analysis, was composed of irregular particles which did not exhibit a spherical morphology.

Example 3 (comparative test)

The test of Example 1 was repeated in the absence of HCl as follows:
11.2 ml of $TiCl_4$ were added to 13.2 ml of $H_2SO_4$ in 50 ml of distilled water.

The clear solution obtained was poured into 500 ml of $H_2O$, in which 0.45 g og Ecoclar 8017 had been dissolved. The volume was adjusted to 600 ml with distilled water while the solution was heated in a 1-liter flash equipped with a reflux condenser.

Already at 80°C a precipitate began to form. After 90 minutes at 100°C the formed precipitate, which could be decanted without difficulty, was filtered, washed with 200 ml of distilled water and dried in an oven at 120°C. There were obtained 7 g of product composed of particles which did not exhibit a spherical morphology. Figure 2 shows a photograph under the transmission electron microscope (enlargement 4580 X).

Example 4

To a solution prepared by dissolving 0.45 g of Ecoclar 8017 in 450 ml of distilled water were added 46.7 ml of $H_2SO_4$ (96%), 11.2 ml of $TiCl_4$ and distilled water, in order to adjust the final volume to 600 ml. The resulting solution appeared turbid and became clear after heating to 100°C. After 10 minutes at 103°C, a slight opalescence appeared, the intensity of which rapidly increased.

After 90 minutes at the above temperature the precipitate was isolated by filtation, washed with 200 ml of distilled water and dried in an oven at 120°C. There were obtained 8 g of $TiO_2$, a photograph of which, obtained under the TEM (enlargement 4580 X), is shown in Figure 3.

Example 5 (comparative test)

The test described in Example 1 was repeated, but without using $H_2SO_4$. After 90 minutes of heating the solid was separated by centrifugation and washed with distilled water.

According to TEM analysis (Figure 4, enlargement 4580 X) the solid was composed of particles which did not exhibit a defined morphology.

Example 6

The procedure of Example 1 was repeated except that 0.6 g of Ecoclar 8032 were used. There were obtained 6.87 g of $TiO_2$ consisting of spherical particles having an average diameter of 0.3 µm (Fig. 5, enlargement 4580 X). The dw/dn ratio, measured as described above, was 1.38.

Example 7

The procedure of the preceding example was repeated, except that 0.6 g of Praestol 444K ware used. The product obtained exhibited characteristics which were similar to those of Example 6.

Example 8

Repeating the procedure of Example 6, the reaction kinetics were followed by withdrawing product samples after heating times of 90, 180 and 300 minutes. The TEM analysis did not reveal variations in the morphology and particle size depending on the heating time.

Example 9

The initial $TiCl_4$ concentration was adjusted to 0.25 moles/l, but the ratios with respect to the other reagents were left unchanged. For this purpose there were utilized 16.5 ml of $TiCl_4$, 147 ml of HCl, 19.4 ml of $H_2SO_4$ and 0.66 g of Ecoclar 8017. Under the conditions given in Example 1 a 23-minute heating to 100°C was required for the appearance of opalescence.

The product obtained after 90 minutes at said temperature did not exhibit substantial differences as compared to the one obtained in Example 1 (Fig. 6a, enlargement 4580 X). When the heating was conducted for 300 minutes, the diameter of the product particles doubled (Fig. 6b, enlargement 4580 X).

Example 10

5 g of the sample obtained by the procedure described in Example 1 were subjected to a heat treatment at 900°C for 4 hours. According to X-ray analysis, the final product consisted of rutile $TiO_2$ and did not differ from its precursor (anatase of Example 1) as to morphology and granulometry.

## Claims

1. Process for preparing titanium dioxide in the form of spherical particles having diameters ranging from 0.2 to 1.5 $\mu m$ and a polydispersion index dw/dn $\leq 2$, dw being the average weighed diameter and dn being the average linear diameter of the particles, by hydrolysis of aqueous solutions, strongly acidic due to HCl or $H_2SO_4$, of Ti(IV) and $SO_4^{=}$ions, in which the $SO_4^{=}$/Ti(IV) ratio is at least 1.5, in the presence of cationic polyelectrolytes which are soluble under the reaction conditions at concentrations such as not to form a phase separated from the aqueous solution and have an average molecular weight of more than 1 million and an ionicity of at least 3 milliequivalents per gram (meq/g).

2. Process according to claim 1, wherein the polydispersion index dw/dn is $\leq 1.20$.

3. Process according to any of claims 1 and 2, wherein the Ti(IV) concentration in the starting solution ranges from 0.05 to 0.25 moles/l.

4. Process according to any of claims 1 to 3, wherein the Ti(IV) concentration in the starting solution ranges from 0.1 to 0.2 moles/l.

5. Process according to any of claims 1 to 4, wherein the cationic polyelectrolytes have an ionicity of more than 3.5 meq/g and an average molecular weight of more than 3 million.

6. Process according to any of claims 1 to 5, wherein the cationic polyelectrolyte is employed in amounts of more than 3% by weight with respect to the theoretical amount of titanium dioxide corresponding to the amount of titanium present in the starting solution.

7. Process according to any of claims 1 to 6, wherein the cationic polyelectrolyte comprises repeating units based on substituted acrylamide having the general formula:

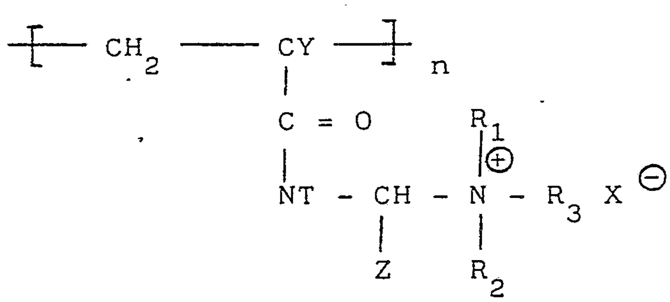

wherein $R_1$, $R_2$, $R_3$ and T are the same or different and are selected from hydrogen and hydrocarbon radicals having 1 to 4 carbon atoms;
Z, Y are $-CH_3$ or H,
X is an anion, and
n is an integer.

8. Process according to claim 7, wherein Y, Z and $R_3$ are H, and $R_1$ and $R_2$ are the same or different and are selected from H, $-CH_3$ and $-C_2H_5$.

9. Process according to any of claims 1 to 6, wherein the cationic polyelectrolyte comprises repeating units based on vinylamine having the general formula:

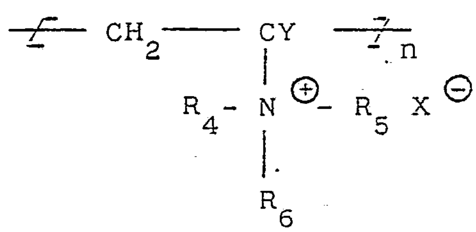

wherein $R_4$, $R_5$ and $R_6$ have the same meanings as $R_1$ defined above and Y and n are as defined above.

10. Process according to claim 9, wherein $R_4$ is H, and $R_5$ and $R_6$ are the same or different and are selected from H, $-CH_3$, $-C_2H_5$.

11. Process according to any of claims 7 and 8, wherein the polyelectrolyte, in addition to the ionic units, also comprises neutral units derived from unsubstituted acrylamide which have the general formula:

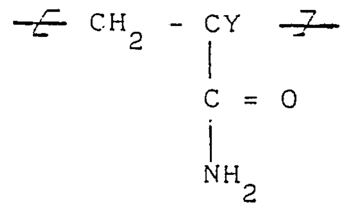

wherein Y is as defined above; the ionic units and the neutral units being statistically distributed along the polymer chain.

12. Process according to any of claims 7 and 8, wherein the cationic polyelectrolyte consists of a copolymer comprising the positively charged units mentioned above and neutral units other than the acrylamide units, statistically distributed along the polymer chain.

13. Process according to claim 12, wherein the neutral units are selected from the following classes:

a1) 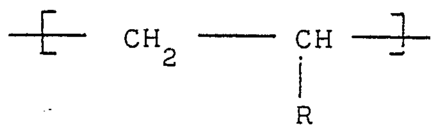

wherein R is H or a hydrocarbon radical having 1 to 4 carbon atoms;

a2) 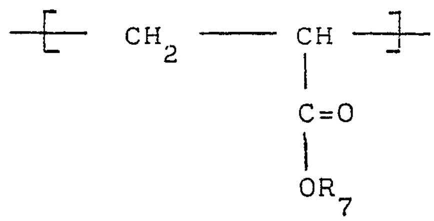

wherein $R_7$ is the same as R;

a3) 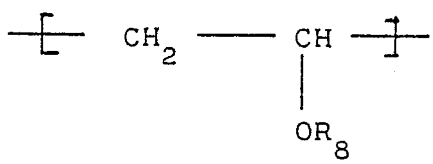

wherein $R_8$ is the same as R;

a4) 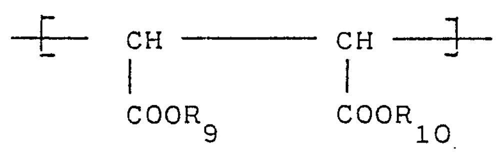

wherein $R_9$ and $R_{10}$ are the same as R;

a5) 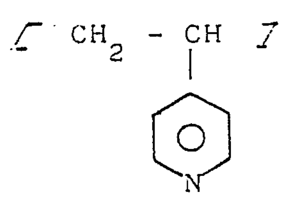

14. Process according to any of claims 1 to 13, wherein the hydrolysis is carried out at temperatures ranging from 90°C to the reflux temperature of the starting solution.

15. Hydrated titanium dioxide as abtained by the process according to any of claims 1 to 14.

F 3552

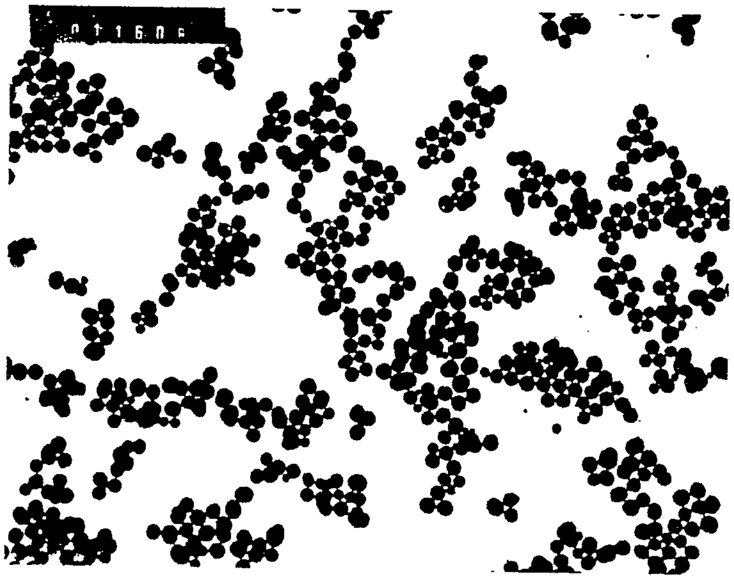

FIG. 1

1 μm

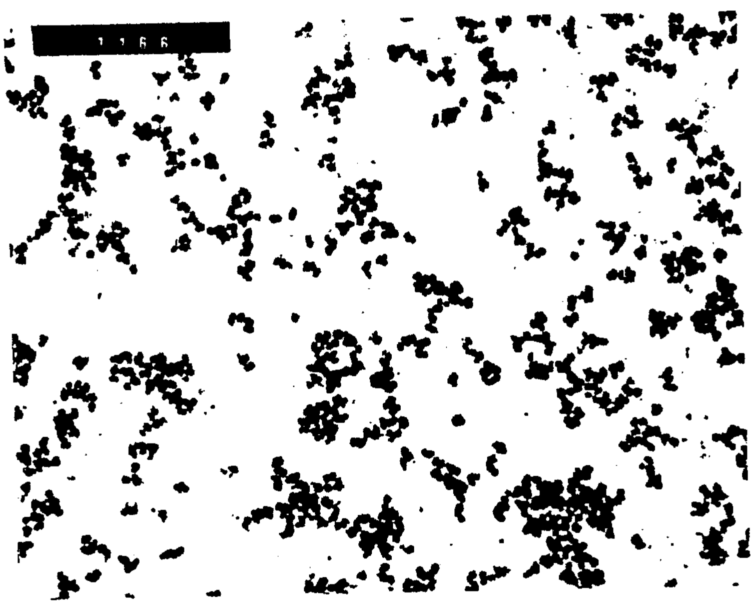

FIG. 2

1 μm

F3552

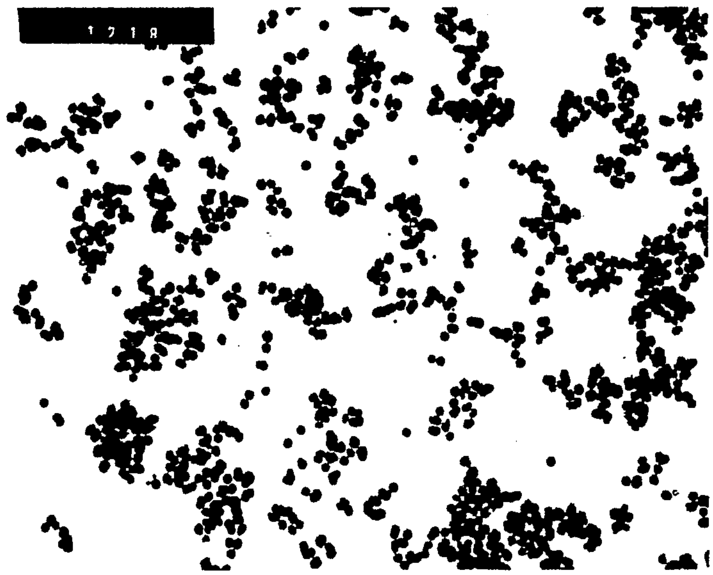

FIG. 3

1 μm

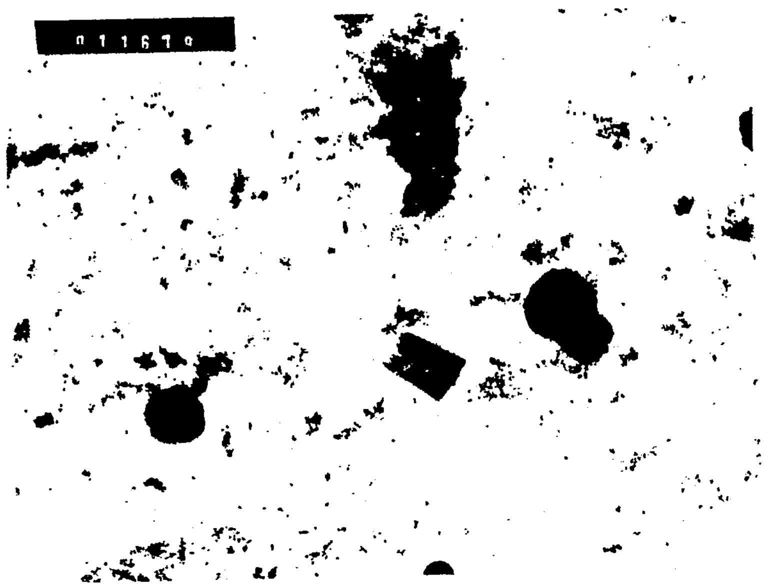

FIG. 4

1 μm

F3552

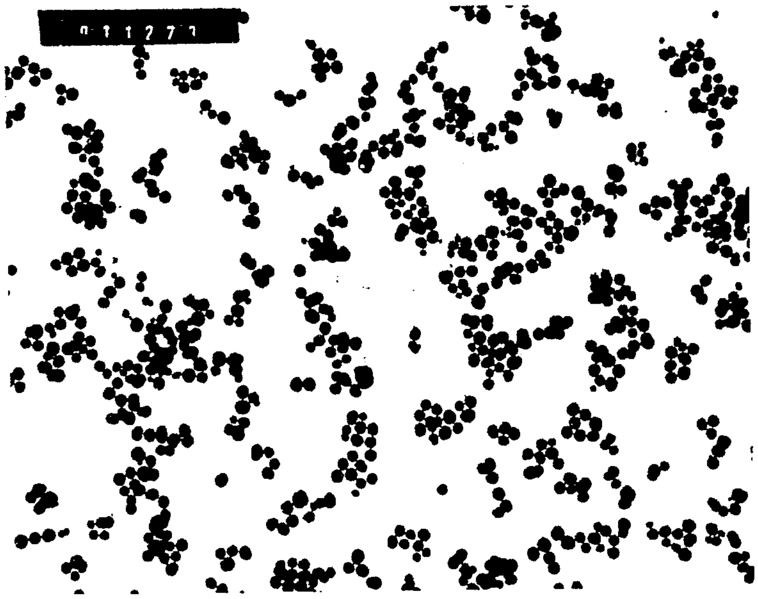

FIG. 5

1 µm

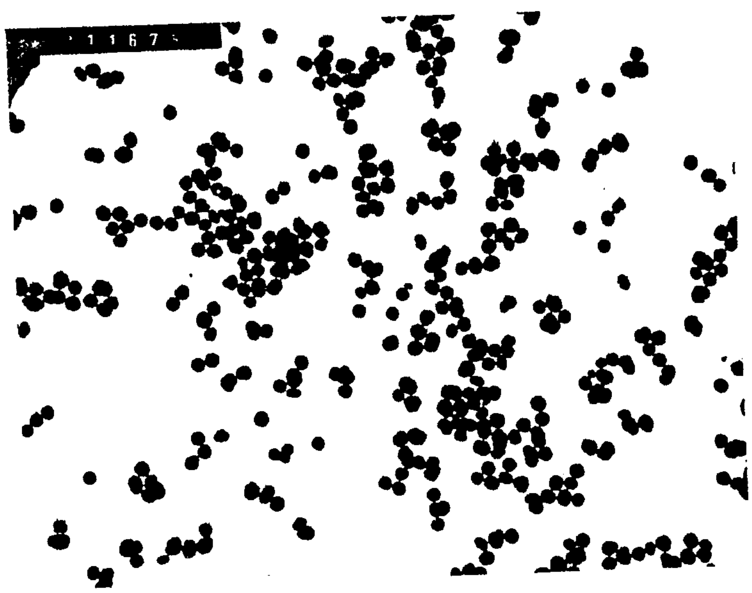

FIG. 6A

1 µm

F 3552

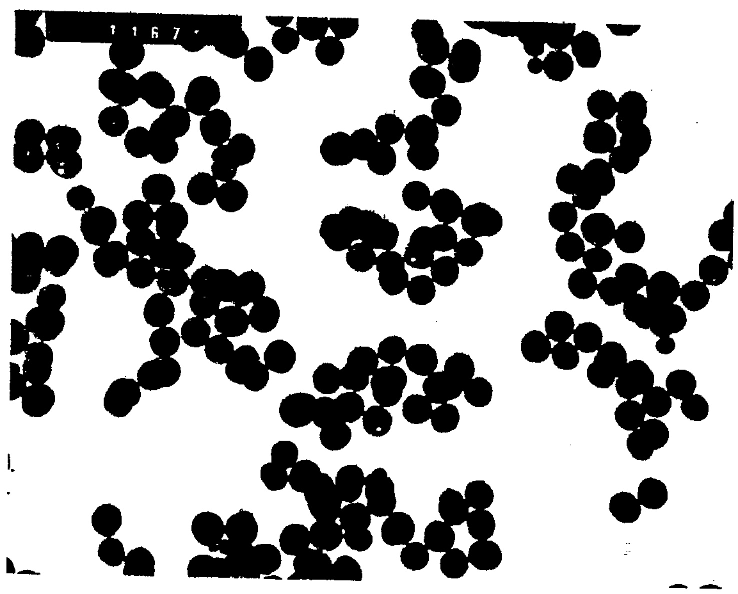

FIG. 6B

1 μm